# EUROPÄISCHE PATENTANMELDUNG

(11) **EP 1 403 025 A1**
(43) Veröffentlichungstag der Anmeldung: **31.03.2004**
(21) Anmeldenummer: 02405837.2
(22) Anmeldetag: 27.09.2002
(51) Int. Cl.: B29C 47/02, A01G 25/02

(54) **Vorrichtung zur kontinuierlichen Herstellung von Tropfbewäserungsrohren**

(71) Anmelder: Kertscher, Eberhard, 1462 Yvonand (CH)
(72) Erfinder: Kertscher, Eberhard, 1462 Yvonand (CH); Bernauer, Thomas, 2000 Neuchâtel (CH)
(74) Vertreter: BOVARD AG - Patentanwälte

(57) **Zusammenfassung**

Eine Vorrichtung zur kontinuierlichen Herstellung von Tropfbewässerungsrohren umfasst eine Extrusionseinrichtung (1 ) zur Erzeugung eines Rohrkörpers (2), eine Kalibriereinrichtung (3) und eine Kühleinrichtung (19) für den Rohrkörper (6). Ferner ist eine Zuführeinrichtung (5) für Dosierelemente (6) in den Rohrkörper (2) sowie Mittel zum Verbinden der Dosierelemente (6) mit der Innenwandung des Rohrkörpers (2) vorgesehen. Die Zuführeinrichtung (5) umfasst eine Vereinzelungseinrichtung (7), in welcher von den kontinuierlich zugeführten Dosierelementen jeweils das Nächste erfassbar ist, gesteuert auf eine Führungsbahn (4) ausstossbar ist und mittels einer Luftströmung entlang der Führungsbahn (4) in den Rohrkörper (2) einbringbar ist. Mit dieser Vorrichtung lassen sich Tropfbewässerungsrohre herstellen, bei welchen die Dosierelemente einen beliebig vorgegebenen Abstand voneinander aufweisen können, wodurch eine optimale Bewässerung einer Bepflanzung möglich wird.

## Beschreibung

Die vorliegende Erfindung bezieht sich auf eine Vorrichtung zur kontinuierlichen Herstellung von Tropfbewässerungsrohren, umfassend eine Extrusionseinrichtung zur Erzeugung eines Rohrkörpers, eine Kalibriereinrichtung und eine Kühleinrichtung für den Rohrkörper, eine Zuführeinrichtung für Dosierelemente in den Rohrkörper, und Mittel zum Verbinden der Dosierelemente mit der Innenwandung des Rohrkörpers.

Mit derartigen bekannten Vorrichtungen werden Tropfbewässerungsrohre hergestellt, mit welchen eine direkte Bewässerung von Pflanzen erreichbar ist. Im Bereich jeder Pflanze sind in diesem Rohr Dosierelemente angebracht, durch welche das Wasser über eine Bohrung aus dem Tropfbewässerungsrohr tropfweise ausgelassen wird. Durch diese direkte tropfweise Bewässerung der einzelnen Pflanzen wird nicht in unnötiger Weise eine grosse Menge des Wassers verschwendet, wie dies üblicherweise bei Bewässerungsanlagen geschieht, mittels welchen das Wasser durch Spritzanlagen grossflächig verteilt wird. Mit der Tropfbewässerung wird ein äusserst wirtschaftliches System angewendet, das Wasser kann sehr sparsam eingesetzt werden.

Aus der EP-A-0 970 602 ist eine Einrichtung zur Herstellung derartiger Tropfbewässerungsrohre dargestellt. Hierbei wird durch eine Extrusionseinrichtung ein Rohrkörper erzeugt, der eine Kalibrier- und Kühlvorrichtung durchläuft. In den Rohrkörper eingeführt werden fortlaufend Dosierelemente, die kontinuierlich vorgeschoben werden. Sobald das vorderste Dosierelement mit der extrudierten Rohrwandung in Kontakt kommt, wird dieses mitgezogen und mittels einem im Rohrkörper angebrachten Anpresskörper und einem aussenseitig auf die Rohrwandung wirkenden Anpressband mit dem Rohrkörper verbunden. In bekannter Weise wird danach in die Rohrwandung die Austrittsöffnung für das Wasser angebracht.

Mit dieser Vorrichtung können Tropfbewässerungsrohre hergestellt werden, bei welchen der gegenseitige Abstand der Dosierelemente etwa gleich gross ist. Hierbei ist aber nicht auszuschliessen, dass beim gegenseitigen Abstand dieser Dosierelemente Abweichungen auftreten können, und dass derartige Abweichungen sich aufsummieren. Bei einer Reihe von wenigen Pflanzen, deren Abstand sehr klein ist, spielt dies keine Rolle. Mit dieser Vorrichtung ist es aber auch nicht möglich, den Abstand der einzelnen Dosierelemente voneinander beliebig zu variieren.

Beispielsweise bei der Bewässerung von Bäumen oder Sträuchern ist es notwendig, dass das entsprechende Tropfbewässerungsrohr im Bereich der Wurzeln dieser Pflanzen mehrere Dosierelemente mit Austrittsöffnungen aufweist, die einen relativ kleinen Abstand haben voneinander. Zwischen den Pflanzen sollten diese Tropfbewässerungsrohre aber keine Austrittsöffnungen haben, damit dieser Zwischenbereich nicht auch bewässert wird.

Die Aufgabe der vorliegenden Erfindung besteht somit darin, eine Vorrichtung zu schaffen, mit welchen Tropfbewässerungsrohre hergestellt werden können, deren Dosierelemente einen wählbaren Abstand haben voneinander.

Erfindungsgemäss erfolgt die Lösung dieser Aufgabe dadurch, dass die Zuführeinrichtung eine Vereinzelungseinrichtung umfasst, in welcher von den kontinuierlich zugeführten Dosierelementen jeweils das nächste erfassbar ist, gesteuert auf eine Führungsbahn ausstossbar ist und mittels einer Luftströmung entlang der Führungsbahn in den Rohrkörper einbringbar ist.

Dadurch können die Dosierelemente im gewünschten Abstand vom vorhergehenden in den Rohrkörper eingesetzt werden, wodurch Tropfbewässerungsrohre produziert werden können, mit welchen die unterschiedlichsten Anforderungen gemäss der vorgängig gestellten Aufgabe erfüllt werden können.

In vorteilhafter Weise besteht die Vereinzelungseinrichtung aus zwei antreibbaren Rollen, die einander gegenüberliegend angeordnet sind, wobei jeweils ein Dosierelement von den kontinuierlich zugeführten Dosierelementen durch die beiden Rollen erfassbar, in eine Warteposition bringbar und von dieser auf die Führungsbahn ausstossbar ist. Dadurch lassen sich die Dosierelemente mit gewünschtem Abstand im Rohrkörper anbringen.

In der Führungsbahn ist ein Sensor angebracht, mit welchem das Erreichen der Warteposition des jeweiligen Dosierelementes feststellbar ist, wodurch ein störungsfreier Herstellungsablauf gewährleistet ist.

Die Luftströmung ist mit Luftdüsen erzeugbar, die aus Zuführleitungen gebildet sind, die in die Führungsbahn münden, wobei die Zuführleitungen so angeordnet sind, dass der jeweils austretende Luftstrom mit einem Winkel von etwa 25° auf das vorzuschiebende Dosierelement auftrifft. Damit wird ein sehr schneller und einfacher Transport der Dosierelemente erreicht, die Genauigkeit ist gewährleistet.

In vorteilhafter Weise umfassen die Mittel zum Verbinden der Dosierelemente mit der Innenwandung des Rohrkörpers ein Anpresselement, das durch den Endbereich der Führungsbahn gebildet ist und in den extrudierten Rohrkörper hineinragt, und eine Anpressrolle, die aussenseitig im Bereich des Anpresselementes an den Rohrkörper anpressbar ist. Dadurch wird sichergestellt, dass der Anpressdruck zum Verbinden der Dosierelemente mit der Innenwandung des Rohrkörpers über die gesamte Länge des Dosierelementes konstant ist, so dass diese optimal wird und die Gefahr ausgeschlossen wird, dass der Labyrinthdurchgang beispielsweise durch zu grosse Anpressung in einzelnen Bereichen beeinträchtigt wird.

Durch die Möglichkeit, den Anpressdruck der Anpressrolle an den Rohrkörper einstellen zu können, kann dieser an die Beschaffenheit des Rohres und des Dosierelementes angepasst werden.

In vorteilhafter Weise ist die Anpressrolle am Ende der Kalibriereinrichtung angeordnet, wodurch eine optimale Verbindung zwischen Dosierelement und Rohrkörper erreicht wird.

Eine weitere vorteilhafte Ausgestaltung der Erfindung besteht darin, dass die Anpressrolle eine Einbuchtung aufweist, die der Aussenkontur des Rohrkörpers im Bereich der Kalibriereinrichtung entspricht. Dadurch wird ein gleichmässiger Druck der Anpressrolle über die gesamte Breite des Dosierelementes erreicht, die Verbindung wird optimal.

Eine weitere vorteilhafte Ausgestaltung der Erfindung besteht darin, dass mindestens im Grund der Einbuchtung der Anpressrolle eine über den gesamten Umfang verlaufende Markierungsstruktur angebracht ist, welche auf die Oberfläche des Rohrkörpers im Bereich des Dosierelementes übertragbar ist. Diese Markierung der Oberfläche des Rohrkörpers ermöglicht, dass die Position des Dosierelementes im Rohrkörper von aussen genau feststellbar ist, so dass die Bohrung für die Austrittsöffnung am richtigen Ort angebracht werden kann, unabhängig von den Abständen der Dosierelemente untereinander.

Eine Ausführungsform der vorliegenden Erfindung wird nachfolgend anhand der beiliegenden Zeichnung beispielhaft näher erläutert. Es zeigt
Fig. 1 eine schematische Schnittdarstellung der erfindungsgemässen Vorrichtung im Bereich der Vereinzelungseinrichtung, der Extrusionseinrichtung und der Kalibriereinrichtung und der Kühleinrichtung;
Fig. 2 eine Querschnittdarstellung im Bereich der Anpressrolle quer zur Laufrichtung des extrudierten Rohrkörpers; entlang Linie II-II gemäss Fig. 1 und
Fig. 3 im Schnitt den Verbindungsbereich des Dosierelementes mit dem Rohrkörper mit der übertragenen Markierungsstruktur, die in dieser Figur stark vergrössert dargestellt ist.

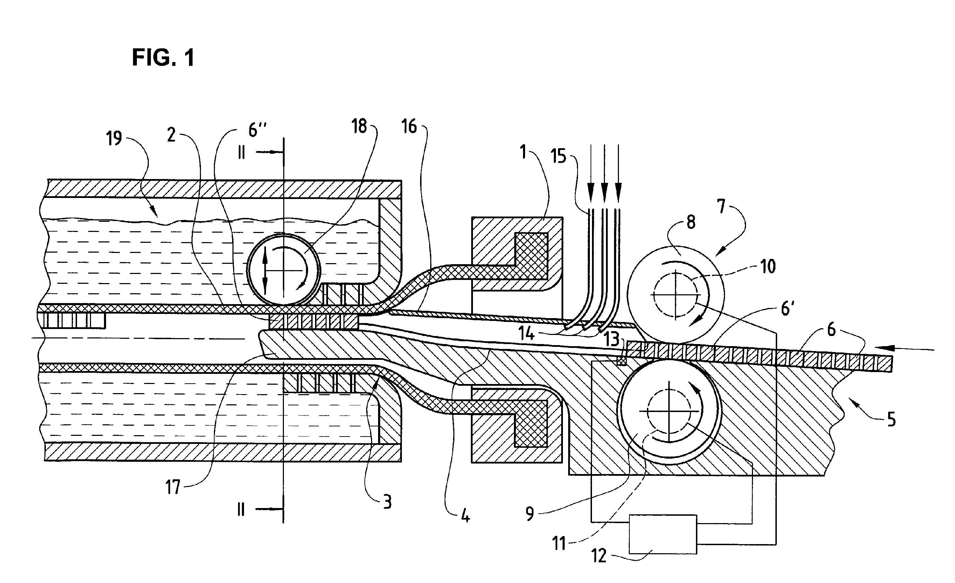

Fig. 1 zeigt eine Extrusionseinrichtung 1, aus welcher ein Rohrkörper 2 in bekannter Weise extrudiert wird. Dieser Rohrkörper 2 wird in eine Kalibriereinrichtung 3 eingeleitet und auf das gewünschte Mass gebracht. In bekannter Weise durchläuft der kalibrierte Rohrkörper 2 nach der Kalibriereinrichtung 3 eine Kühleinrichtung 19. Der Rohrkörper 2 wird zur Weiterverarbeitung durch nicht dargestellte Einrichtungen geführt und aufgewickelt.

In den Rohrkörper 2 hinein ragt eine Führungsbahn 4, die die Fortsetzung einer Zuführeinrichtung 5 für Dosierelemente 6 bildet, über welche die Dosierelemente 6 in bekannter Weise und in ununterbrochener Reihe einer Vereinzelungseinrichtung 7 zugeführt werden.

Die Vereinzelungseinrichtung 7 umfasst zwei antreibbare Rollen 8 und 9, die einander gegenüberliegend sind. Die beiden Rollen 8 und 9 sind mit einem schematisch dargestellten Antrieb 10 bzw. 11 ausgestattet, welche die beiden Rollen 8 und 9 in Pfeilrichtung antreiben können. Die beiden Antriebe 10 und 11 sind mit einer schematisch dargestellten Steuereinrichtung 12 verbunden.

Das vorderste Dosierelement 6' der durch die Zuführeinrichtung 5 zugeführten Dosierelemente 6 ist durch die beiden Rollen 8 und 9 ergriffen worden und in die hier dargestellte Warteposition gebracht worden. Diese Warteposition wird durch einen in der Führungsbahn 4 angebrachten Sensor 13 überwacht, der ebenfalls mit der Steuereinrichtung 12 verbunden ist.

Aus dieser Warteposition wird, wenn der Befehl von der Steuereinrichtung 12 ausgegeben wird, das Dosierelement 6' mit grosser Beschleunigung der angetriebenen Rollen 8 und 9 in die Führungsbahn 4 hinausbefördert. Durch die grosse Beschleunigung entsteht zwischen dem hinausbeförderten Dosierelement 6' und dem nachfolgenden Dosierelement 6 ein Zwischenraum. Die Geschwindigkeit der Rollen wird reduziert, das nachfolgende Dosierelement 6 wird durch die Rollen 8 und 9 erfasst und wiederum in die Warteposition gebracht, wonach die Rollen 8 und 9 bis zum nächsten Empfang eines Signals still stehen.

Das in die Führungsbahn hinausbeförderte Dosierelement wird durch eine Luftströmung erfasst und weiter transportiert.

Die Luftströmung ist durch Luftdüsen 14 in der Führungsbahn 4 erzeugbar, welche Luftdüsen 14 durch Zuführleitungen 15 gebildet sind, welche in eine Abdeckung 16 münden, die die Führungsbahn 4 gegen oben abschliesst. Um einen schnellen und optimalen Transport der Dosierelemente über die Führungsbahn 4 zu erreichen, sind die Zuführleitungen 15 so angeordnet, dass der jeweils austretende Luftstrom mit einem Winkel von etwa 25° auf das vorzuschiebende Dosierelement auftrifft. Dabei wird das Dosierelement mit einer Geschwindigkeit transportiert, die grösser ist als die Geschwindigkeit des extrudierten Rohres. Das Dosierelement kann beispielsweise eine Geschwindigkeit von etwa 50 m/s erreichen.

Mit dieser Luftströmung gelangt das Dosierelement über die Führungsbahn 4 in den Bereich der Kalibriereinrichtung 3 und wird vom vorlaufenden extrudierten Rohrkörper 2 mitgenommen.

Am Endbereich der Führungsbahn 4 ist ein Anpresselement 17 angeordnet, auf welchem das Dosierelement 6", das durch den Rohrkörper 2 mitgenommen wird, abgestützt wird. Mit dem Anpresselement 17 wirkt eine Anpressrolle 18 zusammen, die aussenseitig an den Rohrkörper 2 anpressbar ist. Durch die Anpressrolle 18, welche mit der Anlagengeschwindigkeit synchronisiert ist, und das Anpresselement 17, wird das Dosierelement 6" in den noch sehr weichen Rohrkörper 2 eingepresst und mit diesem verbunden. Durch die Verwendung einer Anpressrolle erhält man über die gesamte Länge des Dosierelementes 6" einen gleich bleibenden Druck, so dass die Verbindung zwischen Dosierelement 6" und Rohrkörper 2 in optimaler Weise erfolgen kann. In bekannter Weise lässt sich der Anpressdruck der Anpressrolle 18 einstellen und an die vorliegenden Verhältnisse anpassen.

In bekannter Weise durchläuft danach der Rohrkörper 2 die Kühleinrichtung 19, wo der Rohrkörper 2 abgekühlt wird.

Um eine optimale Verbindung zwischen Dosierelement und Rohrkörper 2 zu erreichen, ist die Anpressrolle 18 vorteilhaft am Ende der Kalibriereinrichtung 3 angeordnet, so dass das Material des Rohrkörpers 2 im Verbindungsbereich noch nicht zu stark abgekühlt ist.

Über die Steuerung 12 lässt sich die Intervallgrösse des Ausstossens des jeweiligen Dosierelementes 6' auf die Führungsbahn 4 beliebig programmieren. Die Zeitspanne nach dem Ausstossen des Dosierelementes 6' aus den Rollen 8 und 9 bis zum Erreichen des Rohrkörpers ist sehr klein und konstant. Somit lässt sich der Abstand eines in den Rohrkörper 2 eingesetzten Dosierelementes zum nachfolgenden Dosierelement bei gegebener Vorschubgeschwindigkeit des Rohrkörpers 2 sehr genau bestimmen. Der Abstand kann demzufolge praktisch beliebig gross gehalten werden, wodurch Tropfbewässerungsrohre hergestellt werden können, die an den gewünschten Stellen mit Dosierelementen und Austrittsöffnungen versehen werden können.

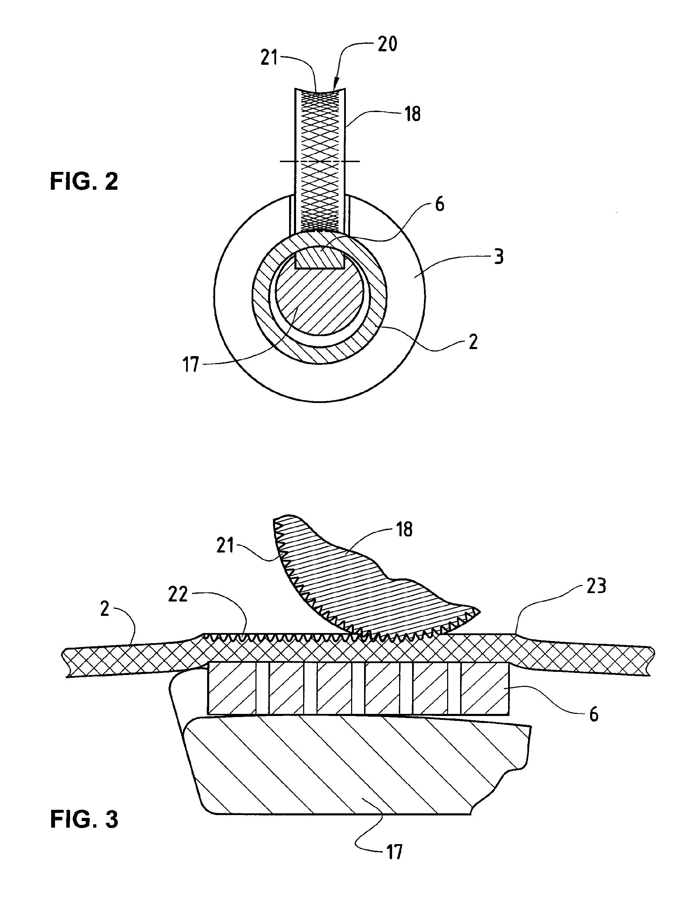

Fig. 2 zeigt im Schnitt die Kalibriereinrichtung 3, durch welche der Rohrkörper 2 geleitet wird. In den Rohrkörper 2 hinein ragt, wie zu Fig. 1 beschrieben worden ist, das Anpresselement 17. Auf diesem Anpresselement 17 wird das Dosierelement 6 an die Innenwandung des Rohrkörpers 2 angelegt. Die äussere Oberfläche des Rohrkörpers 2 ist in Kontakt mit der Anpressrolle 18. Durch das Anpresselement 17 und die mit diesem zusammenwirkende Anpressrolle 18 wird das Dosierelement 6 in den Rohrkörper 2 eingedrückt und mit diesem verbunden. Um eine optimale Verbindung zu erhalten, ist die Anpressrolle 18 mit einer Einbuchtung 20 versehen, die der Aussenkontur des Rohrkörpers 2 im Bereich der Kalibriereinrichtung 3 entspricht. In vorteilhafter Weise ist das Dosierelement 6 auf der Verbindungsseite mit dem Rohrkörper 2 ebenfalls bombiert ausgebildet.

Im Grund der Einbuchtung 20 der Anpressrolle 18 ist eine über den gesamten Umfang verlaufende Markierungsstruktur 21 angebracht. Diese Markierungsstruktur 21 kann beispielsweise eine feine Rändelung sein.

Wie aus Fig. 3 ersichtlich ist, wird diese Markierungsstruktur 21, die in Fig. 3 stark vergrössert dargestellt ist, in die Oberfläche des Rohrkörpers 2 übertragen, da der Rohrkörper in diesem Bereich noch sehr weich ist. Hierbei wird diese Markierungsstruktur 21 nur dort übertragen, wo ein Gegendruck vorhanden ist, das heisst lediglich über die Länge des Dosierelementes 6, das mit dem Rohrkörper 2 verbunden wird. Beim Eindrücken des Dosierelementes 6 in die Wandung des Rohrkörpers 2 entsteht aussenseitig eine Ausbuchtung 23, die der Aussenkontur des Dosierelementes 6 entspricht. Dadurch wird der Effekt unterstützt, dass die Markierungsstruktur 21 nur im Bereich des Dosierelementes 6 auf die Oberfläche des Rohkörpers 2 übertragen wird. Wenn kein Dosierelement 6 zwischen dem Anpresselement 17 und der Anpressrolle 18 vorhanden ist, entsteht kein Druck auf die Anpressrolle 18, die Markierungsstruktur 21 wird somit nicht auf die Oberfläche des Rohrkörpers 2 übertragen.

Mit dieser Einrichtung erhält man somit an der Oberfläche des Rohrkörpers 2 an den Stellen, wo sich im Rohrkörper ein Dosierelement 6 befindet, ebenfalls eine Markierungsstruktur 22. Diese Markierungsstruktur 22 kann in bekannter Weise und nach dem Verlassen der Kühleinrichtung 19, wie dies in Fig. 1 ersichtlich ist, über Detektormittel erfasst werden, welche mit einer Bohreinrichtung zusammenwirken, so dass die Austrittsöffnung an der genau richtigen Stelle in den Rohrkörper 2 gebohrt werden kann. Dies ermöglicht ein korrektes Anbringen der Austrittsöffnungen im Rohrkörper, unabhängig davon, wie gross die Abstände zwischen den einzelnen eingesetzten Dosierelementen sind.

Es wäre auch denkbar, dass die Markierungsstruktur 21 an der Anpressrolle 18 eingefärbt wird, und dass diese Farbe mit der Markierungsstruktur 21 auf die Oberfläche des Rohrkörpers 2 übertragen wird, und so auf dem Rohrkörper 2 eine farbige Markierungsstruktur 22 entstehen würde, was unter Umständen den Detektierungsvorgang der Markierungsstruktur 22 auf dem Rohrkörper 2 erleichtern würde. Ein derartiges Bedrucken könnte beispielsweise mit einem Offsetdruckverfahren erreicht werden.

Mit der erfindungsgemässen Vorrichtung können Tropfbewässerungsrohre hergestellt werden, die mit Dosierelementen versehen sind, die einen beliebigen Abstand voneinander haben können, so dass die Dosierelemente und damit das tröpfchenweise Austreten von Wasser an der gewünschten Stelle des Tropfbewässerungsrohres angebracht werden kann. Derartige Tropfbewässerungsrohre können somit in beliebiger Weise an die jeweilige Bepflanzungsanordnung angepasst werden.

## Patentansprüche

1. Vorrichtung zur kontinuierlichen Herstellung von Tropfbewässerungsrohren, umfassend eine Extrusionseinrichtung (1) zur Erzeugung eines Rohrkörpers (2), eine Kalibriereinrichtung (3) und eine Kühleinrichtung (19) für den Rohrkörper (2), eine Zuführeinrichtung (4, 5) für Dosierelemente (6) in den Rohrkörper (2), und Mittel zum Verbinden der Dosierelemente (6) mit der Innenwandung des Rohrkörpers (2), **dadurch gekennzeichnet, dass** die Zuführeinrichtung (4, 5) eine Vereinzelungseinrichtung (7) umfasst, in welcher von den kontinuierlich zugeführten Dosierelementen (6) jeweils das nächste erfassbar ist, gesteuert auf eine Führungsbahn (4) ausstossbar ist und mittels einer Luftströmung entlang der Führungsbahn (4) in den Rohrkörper (2) einbringbar ist.

2. Vorrichtung nach Anspruch 1, **dadurch gekennzeichnet, dass** die Vereinzelungseinrichtung (7) aus zwei antreibbaren Rollen (8, 9) gebildet ist, die einander gegenüberliegend angeordnet sind, und dass jeweils ein Dosierelement (6') von den kontinuierlich zugeführten Dosierelementen (6) durch die beiden Rollen (8, 9) erfassbar, in eine Warteposition bringbar und von dieser auf die Führungsbahn (4) ausstossbar ist.

3. Vorrichtung nach Anspruch 2, **dadurch gekennzeichnet, dass** in der Führungsbahn (4) ein Sensor (13) angebracht ist, mit welchem das Erreichen der Warteposition des jeweiligen Dosierelementes (6') feststellbar ist.

4. Vorrichtung nach einem der Ansprüche 1 bis 3, **dadurch gekennzeichnet, dass** die Luftströmung mit Luftdüsen (14) erzeugbar ist, die aus Zuführleitungen (15) gebildet sind, die in die Führungsbahn (4) münden, und dass die Zuführleitungen (15) so angeordnet sind, dass der jeweils austretende Luftstrom mit einem Winkel von etwa 25° auf das vorzuschiebende Dosierelement (6) auftrifft.

5. Vorrichtung nach einem der Ansprüche 1 bis 4, **dadurch gekennzeichnet, dass** die Mittel zum Verbinden der Dosierelemente (6) mit der Innenwandung des Rohrkörpers (2) ein Anpresselement (17), das durch den Endbereich der Führungsbahn (4) gebildet ist und in den extrudierten Rohrkörper (2) hineinragt, und eine Anpressrolle (18) umfassen, die aussenseitig im Bereich des Anpresselementes (17) an den Rohrkörper (2) anpressbar ist.

6. Vorrichtung nach Anspruch 5, **dadurch gekennzeichnet, dass** der Anpressdruck der Anpressrolle (18) an den Rohrkörper (2) einstellbar ist.

7. Vorrichtung nach Anspruch 5 oder 6, **dadurch gekennzeichnet, dass** die Anpressrolle (18) im Bereich der Kalibriereinrichtung (3) angeordnet ist.

8. Vorrichtung nach einem der Ansprüche 5 bis 7, **dadurch gekennzeichnet, dass** die Anpressrolle (18) eine Einbuchtung (20) aufweist, die der Aussenkontur des Rohrkörpers (2) im Bereich der Kalibriereinrichtung (3) entspricht.

9. Vorrichtung nach Anspruch 8, **dadurch gekennzeichnet, dass** mindestens im Grund der Einbuchtung (20) der Anpressrolle (18) eine über den gesamten Umfang verlaufende Markierungsstruktur (21) angebracht ist, welche auf die Oberfläche des Rohrkörpers (2) im Bereich des jeweiligen Dosierelementes (6) übertragbar ist.
